(19) Europäisches Patentamt
European Patent Office
Office européen des brevets

(11) **EP 4 205 554 A1**

(12) # EUROPEAN PATENT APPLICATION
published in accordance with Art. 153(4) EPC

(43) Date of publication:
**05.07.2023 Bulletin 2023/27**

(21) Application number: **21861020.2**

(22) Date of filing: **14.07.2021**

(51) International Patent Classification (IPC):
**A23L 2/00** (2006.01)

(52) Cooperative Patent Classification (CPC):
**A23L 2/00**

(86) International application number:
**PCT/JP2021/026407**

(87) International publication number:
**WO 2022/044591 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.08.2020 JP 2020141321**

(71) Applicant: **Takasago International Corporation Tokyo 144-8721 (JP)**

(72) Inventors:
• **KAMINO, Takuya**
  **Hiratsuka-shi, Kanagawa 254-0073 (JP)**
• **KOYAMA, Yuki**
  **Hiratsuka-shi, Kanagawa 254-0073 (JP)**
• **TAMAI, Yuya**
  **Hiratsuka-shi, Kanagawa 254-0073 (JP)**

(74) Representative: **Zimmermann & Partner Patentanwälte mbB Postfach 330 920 80069 München (DE)**

(54) **CARBONATED BEVERAGE, METHOD FOR PREPARING FLAVOR COMPOSITION, AND METHOD FOR SUPPRESSING BUBBLES OF CARBONATED BEVERAGE**

(57) The present invention provides a carbonated beverage suppressed in spilling-out over during production or upon opening, a carbonated beverage flavor composition that suppresses spilling-out, and a method for suppressing spilling-out. The present invention relates to a carbonated beverage containing 1-160 ppm of a flavor component having a Log P of 2.8-8, a flavor composition containing a flavor component having a Log P of 2.8-8, and a method for suppressing effervescence of a carbonated beverage, the method comprising adjusting the content of a flavor component having a Log P of 2.8-8 in the carbonated beverage to 1-160 ppm.

EP 4 205 554 A1

**Description**

Technical Field

The present invention relates to a carbonated beverage, a method for preparing a flavor composition, and a method for suppressing effervescence of carbonated beverages.

Background Art

Carbonated beverages are popular in the market because they are often drunk for the unique stimulation felt in the oral cavity due to the carbon dioxide gas in the beverage, and can be enjoyed with stimulating and refreshing sensations. In addition, due to the recent diversification of consumer tastes, not only plain carbonated beverages but also carbonated beverages containing flavors and fruit juices are offered, and it is known that carbonated beverages have a stronger aroma than non-carbonated beverages.

Meanwhile, carbonated beverages have carbon dioxide gas dissolved in a supersaturated state, which may cause problems such as spurting of the carbonated beverages when filling containers such as PET bottles or when consumers open the caps. In view of this, for example, Patent Literature 1 discloses a technique that can effectively and stably suppress the spurting of carbonated beverages by classifying aroma components by LogP and controlling their content ratios. In addition, Patent Literature 2 discloses a technique that suppresses spurting and spillage during filling by blending tri- or higher polysaccharides.

Citation List

Patent Literatures

    Patent Literature 1: Japanese Patent Application Publication No. 2019-165668
    Patent Literature 2: Japanese Patent Application Publication No. 2014-226073

Summary of Invention

Problems to be solved by the invention

However, the technique disclosed in Patent Literature 1 is expressed by the content ratio of the hydrophobic aroma component and the hydrophilic aroma component, and still has a problem in that it is necessary to consider both the flavor tone and the effervescence. Moreover, the technique disclosed in Patent Literature 2 does not focus on the effervescence of the flavor component itself.

Means for solution of the problems

Therefore, with the aim of providing a carbonated beverage capable of suppressing the spurting and spillage of the carbonated beverage during production and opening, the present inventors paid attention to the action of flavor components on foam during intensive studies, and also paid attention to the physical property values of flavor components related to this action. Thus, the present invention has been completed.

Specifically, the present invention provides a carbonated beverage containing 1 ppm to 160 ppm of a flavor component having a LogP of 2.8 to 8 and a flavor composition containing a flavor component having a LogP of 2.8 to 8, and also provides a method for suppressing effervescence of carbonated beverages, including the step of adjusting the content of a flavor component having a LogP of 2.8 to 8 in the carbonated beverage to 1 ppm to 160 ppm.

Advantageous Effects of Invention

The present invention provides a carbonated beverage whose spurting and spillage are suppressed during production and opening, a flavor composition for carbonated beverages that suppresses spurting and spillage, and a technique capable of suppressing spurting and spillage.

Description of Embodiments

The present invention is described below.

The LogP of the flavor component used in the present invention can be calculated based on, for example, "United States Environmental Protection Agency ver. 4.11". Note that larger values of LogP indicate higher hydrophobicity.

The flavor component used in the present invention has a LogP of 2.8 to 8, preferably a LogP of 2.8 to 6 in terms of solubility, calculated according to the above "United States Environmental Protection Agency ver. 4.11". Specific examples include benzyl benzoate, isoamyl benzoate, benzyl phenyl acetate, benzyl salicylate, octanol, nonanol, decanol, and menthyl 3-hydroxybutyrate. Benzyl benzoate, menthyl 3-hydroxybutyrate, ethyl myristate, methyl myristate, and ethyl palmitate are preferable because they have a small impact on the flavor tone. Moreover, these flavor components may be used singly or in combination of two or more.

The content of the flavor component is 1 ppm to 160 ppm, preferably 2 ppm to 100 ppm, more preferably 3 ppm to 50 ppm, and further preferably 4 ppm to 20 ppm, based on the carbonated beverage. When the content of the flavor component is within the above ranges, the effervescence suppressing action on the carbonated beverage can be effectively obtained, and the impact on the flavor tone is small.

Carbonated beverages in the present invention can be, for example, various beverages containing carbon dioxide gas such as carbonated beverages containing only water, flavor, and carbon dioxide gas, cider beverages containing sweeteners and acidulants, and colored carbonated beverages. Also, the carbonated beverage in the present invention may be an alcohol-containing carbonated beverage. Examples of alcohol-containing carbonated beverages include low-malt beer, beer-flavored alcoholic beverages, chuhai, and cocktails.

In the carbonated beverage of the present invention, flavors other than the flavor component may be general flavors such as natural flavors, synthetic flavors, and mixtures of natural flavors and synthetic flavors. For example, fruit flavors, yogurt flavors, ramune flavors, or mixtures thereof can be used. Examples of fruit flavors include citrus fruits (such as orange, lemon, grapefruit, mandarin orange, pomelo, natsumikan, hassaku, lime, citron, yuzu, oroblanco, sudachi, kabosu, and kumquat), berries (raspberries such as raspberry, blackberry, loganberry, youngberry, boysenberry, tayberry, cloudberry, salmonberry, arctic raspberry, and mayberry, bilberries such as blueberry, cranberry, and cowberry, currants such as gooseberry, red currant, and black currant, and gummies, mulberry, strawberry, wolfberry, and elderberry), pears (such as European pear, Japanese pear, and Chinese pear), apple, grape, pineapple, fig, melon, mango, pomegranate, passion fruit, lychee, banana, peach, watermelon, tomato, papaya, guava, and loquat.

These flavors may be used singly or in combination of two or more. From the viewpoint of efficiently obtaining the effervescence suppressing effect on carbonated beverages, it is preferable to use natural flavors of citrus fruits or flavors abundantly contained in citrus fruits.

Solvents contained in the flavor composition of the present invention include ethanol, propylene glycol, triacetin, triethyl citrate, glycerin and the like. These solvents may be used singly or in combination of two or more.

Examples of sweeteners contained in carbonated beverages include fructose glucose corn syrup, sugar (including sucrose and granulated sugar), fructose, high-fructose corn syrup, glucose, oligosaccharides, lactose, honey, starch syrup, sugar alcohols, and high-intensity sweeteners.

Examples of high-intensity sweeteners include aspartame, acesulfame potassium, xylitol, glycyrrhizin, disodium glycyrrhizinate, saccharin, calcium saccharin, sodium saccharin, sucralose, alitame, neotame, arabinose, licorice extract, xylose, stevia, thaumatin, swingle extract, rhamnose, and ribose.

These sweeteners may be used singly or in combination of two or more.

Examples of acidulants contained in carbonated beverages include citric acid, lactic acid, malic acid, tartaric acid, adipic acid, glucono delta-lactone, gluconic acid, succinic acid, glacial acetic acid, fumaric acid, phytic acid, phosphoric acid, and salts thereof.

These acidulants may be used singly or in combination of two or more.

Preferably, the carbonated beverage is substantially free of fruit juice. This makes it possible to efficiently obtain the effervescence suppressing effect on carbonated beverages.

The gas volume of the carbonated beverage (pressure of the carbon dioxide gas) may be appropriately adjusted according to the purpose. According to the present invention, effervescence can be suppressed at a high gas volume of 3.0 to 5.0. However, it is not particularly limited to this, and for example, the gas volume of carbonated beverages may be set to a low gas volume of 0.1 to 3.0.

A known method can be used as a method for injecting carbon dioxide gas. Also, the gas volume in carbonated beverages can be measured by known methods. For example, it can be measured using a commercially available measuring instrument (such as Gas Volume Analyzer GVA-500 manufactured by Kyoto Electronics Manufacturing Co., Ltd.).

Note that the gas volume represents the volume of carbon dioxide gas dissolved in the carbonated beverage based on the volume of the entire carbonated beverage under standard conditions (1 atmospheric pressure, 0°C).

The carbonated beverage of the present invention may contain additional components in addition to flavors, sweeteners, and acidulants to the extent that the effects of the present invention are not impaired. The additional components can be blended as additives. Examples of such additives include colorants, antioxidants, seasonings, reinforcing agents such as vitamins and minerals, pH adjusters, emulsifiers, stabilizers, dietary fibers, and dextrin.

These components may be used singly or in combination of two or more.

It is expected that the present invention can effectively suppress the spurting of carbonated beverages when filling with the carbonated beverages.

Examples

The present invention is described in more detail below with reference to Examples and Comparative Examples, but the present invention is not limited to these.

(Evaluation Method)

A funnel (diameter: 150 mm) was placed so that the tip thereof was positioned 5 mm above the mouth of a 2 L graduated cylinder (height: 490 mm, outer diameter: 9 cm). A 500 mL sample was poured into the funnel, and after 10 seconds, the liquid was carefully poured into the center of the graduated cylinder at a rate of 10 L/min, and the maximum height (maximum total height) reached until effervescence disappeared was measured. From the obtained results, the effervescence rate was calculated based on the following formula.

$$\text{Effervescence rate } (\%) = (\text{maximum total height with addition of a single item expected to have effervescence suppressing effect}) \times 100 / (\text{maximum total height without addition})$$

Note that as a criterion for the effervescence suppressing effect, an effervescence rate of 90% or less was determined as having an effervescence suppressing effect.

The following lemon flavor composition (reference product 1) was prepared. Table 1 shows the formulation of reference product 1.

Table 1

| Compound Name | Weight Ratio |
|---|---|
| Ethyl Alcohol | 58.36 |
| Water | 40.00 |
| Citral | 1.00 |
| $\alpha$-Terpineol | 0.20 |
| Linalool | 0.15 |
| Geraniol | 0.15 |
| Neryl Acetate | 0.05 |
| Geranyl Acetate | 0.05 |
| 4-Terpineol | 0.02 |
| Citronellyl Acetate | 0.01 |
| Nonanal | 0.01 |
| Total | 100.00 |

To commercially available plain strong carbonated water (gas volume 5.0) cooled to 5°C or less, reference product 1 and various flavor components expected to have an effervescence suppressing effect were added so that the total thereof was 0.1% based on the total amount of the carbonated beverage, thereby preparing a sample. Table 2 below shows the mass ratio of reference product 1 and each flavor component.

The results in Table 2 below show that the flavor components added to carbonated beverages in Examples 1 to 9 have an effervescence suppressing action.

Table 2

| Flavor Added | Reference Product 1 | Heptanol | Octanol | Nonanol | Nonanol | Benzyl Ben-zoate | Menthyl 3-Hydroxy-butyrate | Isoamyl Benzoate | Benzyl Phenyl Ac-etate | Decanol | Benzyl Sali-cylate | Foaming Rate (%) |
|---|---|---|---|---|---|---|---|---|---|---|---|---|
| LogP | - | 2.41 | 2.81 | 3.30 | 3.30 | 3.54 | 3.54 | 3.72 | 3.79 | 3.79 | 4.31 | |
| Comparative Example 1 | 100 | | | | | | | | | | | 100 |
| Comparative Example 2 | 99 | 1 | | | | | | | | | | 99 |
| Example 1 | 99 | | 1 | | | | | | | | | 90 |
| Example 2 | 99.9 | | | 0.1 | | | | | | | | 90 |
| Example 3 | 99 | | | | 1 | | | | | | | 70 |
| Example 4 | 99 | | | | | 1 | | | | | | 73 |
| Example 5 | 99 | | | | | | 1 | | | | | 73 |
| Example 6 | 99 | | | | | | | 1 | | | | 73 |
| Example 7 | 99 | | | | | | | | 1 | | | 73 |
| Example 8 | 99 | | | | | | | | | 1 | | 73 |
| Example 9 | 99 | | | | | | | | | | 1 | 71 |

Next, a water-free flavor composition (reference product 2) was prepared. Table 3 shows the formulation of Reference product 2.

Table 3

| Flavor Compound Name | Weight Ratio |
| --- | --- |
| Ethyl Alcohol | 98.36 |
| Citral | 1.00 |
| $\alpha$-Terpineol | 0.20 |
| Linalool | 0.15 |
| Geraniol | 0.15 |
| Neryl Acetate | 0.05 |
| Geranyl Acetate | 0.05 |
| 4-Terpineol | 0.02 |
| Citronellyl Acetate | 0.01 |
| Nonanal | 0.01 |
| Total | 100.00 |

To commercially available plain strong carbonated water (gas volume 5.0) cooled to 5°C or less, reference product 2 and various flavor components expected to have an effervescence suppressing effect were added so that the total thereof was 0.1% based on the total amount of the carbonated beverage, thereby preparing a sample. Table 4 below shows the mass ratio of reference product 2 and each flavor component. Note that the effervescence rate was calculated with Comparative Example 1 as 100%.

Table 4

| LogP | - | 3.54 | 6.27 | 6.76 | 7.74 | Foaming Rate (%) |
| --- | --- | --- | --- | --- | --- | --- |
| Flavor Added | Reference Product 2 | Benzyl Benzoate | Ethyl Myristate | Methyl Myristate | Ethyl Palmitate | |
| Comparative Example 3 | 100 | | | | | 97 |
| Example 10 | 99 | 1 | | | | 78 |
| Example 11 | 99 | | 1 | | | 71 |
| Example 12 | 99 | | | 1 | | 75 |
| Example 13 | 99 | | | | 1 | 70 |

A comparison between Comparative Example 3 and Example 10 in Table 4 showed that the flavor component having an effervescence suppressing effect had the effervescence suppressing effect regardless of the content of ethanol. Moreover, it was shown that the flavor components added in Examples 11 to 13 also had the effervescence suppressing action.

Next, to commercially available sweetener- and acidifier-containing carbonated beverage (gas volume 2.8) cooled to 5°C or less, reference product 1 and various flavor components expected to have an effervescence suppressing effect were added so that the total thereof was 0.1% based on the total amount of the carbonated beverage, thereby preparing a sample. Table 5 below shows the mass ratio of reference product 1 and each flavor component.

The results in Table 5 below show that the flavor components added to carbonated beverages in Examples 14 to 21 have an effervescence suppressing action.

Table 5

| LogP | - | 2.41 | 2.81 | 3.30 | 3.54 | 3.54 | 3.72 | 3.79 | 3.79 | 4.31 | Foaming Rate (%) |
|---|---|---|---|---|---|---|---|---|---|---|---|
| Flavor Added | Reference Product 1 | Heptanol | Octanol | Nonanol | Benzyl Benzoate | Menthyl 3-Hydroxybutyrate | Isoamyl Benzoate | Benzyl Phenyl Acetate | Decanol | Benzyl Salicylate | |
| Comparative Example 4 | 100 | | | | | | | | | | 100 |
| Comparative Example 5 | 99 | 1 | | | | | | | | | 106 |
| Example 14 | 99 | | 1 | | | | | | | | 83 |
| Example 15 | 99 | | | 1 | | | | | | | 75 |
| Example 16 | 99 | | | | 1 | | | | | | 77 |
| Example 17 | 99 | | | | | 1 | | | | | 73 |
| Example 18 | 99 | | | | | | 1 | | | | 88 |
| Example 19 | 99 | | | | | | | 1 | | | 77 |
| Example 20 | 99 | | | | | | | | 1 | | 84 |
| Example 21 | 99 | | | | | | | | | 1 | 81 |

It has been confirmed from these results that no effervescence suppressing effect is observed for flavor compounds having a LogP of less than 2.8, but when adding flavor compounds having a LogP of 2.8 or more and a LogP of 8 or less within the range of 1 ppm to 160 ppm, an effervescence suppression effect is observed.

## Claims

1. A carbonated beverage comprising 1 ppm to 160 ppm of a flavor component having a LogP of 2.8 to 8.

2. The carbonated beverage according to claim 1, wherein the flavor component is at least one selected from benzyl benzoate, isoamyl benzoate, benzyl phenyl acetate, benzyl salicylate, octanol, nonanol, decanol, menthyl 3-hydroxybutyrate, ethyl myristate, methyl myristate, and ethyl palmitate.

3. A flavor composition comprising a flavor component having a LogP of 2.8 to 8 for use in a carbonated beverage, wherein the flavor composition is added to the carbonated beverage so that 1 ppm to 160 ppm of the flavor component having a LogP of 2.8 to 8 is contained in the carbonated beverage.

4. The flavor composition according to claim 3, wherein the flavor component is at least one selected from benzyl benzoate, isoamyl benzoate, benzyl phenyl acetate, benzyl salicylate, octanol, nonanol, decanol, menthyl 3-hydroxybutyrate, ethyl myristate, methyl myristate, and ethyl palmitate.

5. A method for suppressing effervescence of a carbonated beverage, comprising the step of adjusting a content of a flavor component having a LogP of 2.8 to 8 in the carbonated beverage to 1 ppm to 160 ppm.

6. The method according to claim 5, wherein the flavor component is at least one selected from benzyl benzoate, isoamyl benzoate, benzyl phenyl acetate, benzyl salicylate, octanol, nonanol, decanol, menthyl 3-hydroxybutyrate, ethyl myristate, methyl myristate, and ethyl palmitate.

<table>
<tr><td colspan="2" align="center">**INTERNATIONAL SEARCH REPORT**</td><td>International application No.<br><br>PCT/JP2021/026407</td></tr>
</table>

**A. CLASSIFICATION OF SUBJECT MATTER**
Int. Cl. A23L2/00(2006.01)i
FI: A23L2/00 A, A23L2/00 T

According to International Patent Classification (IPC) or to both national classification and IPC

**B. FIELDS SEARCHED**

Minimum documentation searched (classification system followed by classification symbols)
Int. Cl. A23L2/00

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-015686 A (KAWASAKI, Kiyomitsu) 20 January 2005 (2005-01-20), claims, paragraph [0115], examples | 1-4 |
| X | JP 2004-168936 A (KAWASAKI, Kiyomitsu) 17 June 2004 (2004-06-17), claims, paragraph [0065], examples | 1-4 |
| X | JP 61-194049 A (TAKASAGO PERFUMERY CO., LTD.) 28 August 1986 (1986-08-28), claims, p. 4, upper left column, line 6 to upper right column, line 5, examples | 1-4 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24.08.2021 | 14.09.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| | International application No. |
|---|---|
| | PCT/JP2021/026407 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2019-165668 A (ASAHI SOFT DRINKS CO., LTD.) 03 October 2019 (2019-10-03), claims, paragraphs [0009], [0011], examples | 1-6 |
| A | 職場のあんぜんサイト:化学物質:シトラール. 2009 [retrieved on 20 August 2021], Internet: <URL: https://anzeninfo.mhlw.go.jp/anzen/gmsds/5392-40-5.html>, "9. Physical and Chemical Properties", non-official translation (Workplace Safety Site: Chemical Substance: Citral.) | 1-6 |
| A | 職場のあんぜんサイト:化学物質:d－リモネン. 2009 [retrieved on 20 August 2021], Internet: <URL: https://anzeninfo.mhlw.go.jp/anzen/gmsds/5989-27-5.html>, "9. Physical and Chemical Properties", non-official translation (Workplace Safety Site: Chemical Substance: D-Limonene.) | 1-6 |

Form PCT/ISA/210 (continuation of second sheet) (January 2015)

**INTERNATIONAL SEARCH REPORT**
Information on patent family members

International application No.

PCT/JP2021/026407

| Patent Documents referred to in the Report | Publication Date | Patent Family | Publication Date |
|---|---|---|---|
| JP 2005-015686 A | 20.01.2005 | (Family: none) | |
| JP 2004-168936 A | 17.06.2004 | (Family: none) | |
| JP 61-194049 A | 28.08.1986 | FR 2577922 A | |
| JP 2019-165668 A | 03.10.2019 | (Family: none) | |

Form PCT/ISA/210 (patent family annex) (January 2015)

**EP 4 205 554 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019165668 A
- JP 2014226073 A